# EUROPEAN PATENT SPECIFICATION

(11) **EP 3 689 134 B1**
(45) Date of publication and mention of the grant of the patent: **15.06.2022**
(21) Application number: 18863327.5
(22) Date of filing: 25.09.2018
(51) Int. Cl.: A01G 31/00, A01G 7/06, A01G 22/00

(54) **METHOD FOR PRODUCING PLANTS**
VERFAHREN ZUR HERSTELLUNG VON PFLANZEN
PROCÉDÉ DE PRODUCTION DE PLANTES

(30) Priority: 29.09.2017 JP 2017189867; 06.12.2017 JP 2017234031
(43) Date of publication of application: 05.08.2020
(73) Proprietor: FUJIFILM Corporation, Tokyo 106-8620 (JP)
(72) Inventor: WAKATA, Yuichi, Ashigara-kami-gun, Kanagawa 258-8577 (JP); MATSUYAMA, Saori, Ashigara-kami-gun, Kanagawa 258-8577 (JP); HOSOKAWA, Takafumi, Ashigara-kami-gun, Kanagawa 258-8577 (JP); ABURAYA, Yoshihiro, Ashigara-kami-gun, Kanagawa 258-8577 (JP)
(74) Representative: Klunker IP Patentanwälte PartG mbB
(86) International application number: PCT/JP2018/035353
(87) International publication number: WO 2019/065592

(56) References cited:
- JP-A- 2016 106 621
- JP-A- 2016 106 621
- JP-A- 2017 070 923
- JP-A- 2017 086 076
- US-A- 5 216 836
- US-A1- 2017 172 084
- M.A. SHERIF ET AL: "SPLIT-ROOT NUTRITION OF SWEETPOTATO IN HYDROPONIC SYSTEMS", ACTA HORTICULTURAE, no. 401, 1 October 1995 (1995-10-01), pages 121-130, XP055719387, BE ISSN: 0567-7572, DOI: 10.17660/ActaHortic.1995.401.14

## Description

### BACKGROUND OF THE INVENTION

### 1. Field of the Invention

The present invention relates to a method for producing a plant.

### 2. Description of the Related Art

In recent years, various physiological functions of plant-derived polyphenol compounds have attracted attention. In order to efficiently use these polyphenol compounds contained in plants, development of methods for producing plants containing a large amount of polyphenol compounds has been underway.

JP2016-106621A discloses a "method for producing a polyphenol compound-containing plant having an increased amount of polyphenol compound as compared with a plant subjected to a root portion removal step, including a root portion removal step of removing a root portion of a grown polyphenol compound-containing plant selected from the group consisting of a tuber other than a sweet potato, a plant belonging to the family *Convolvulaceae,* and a plant belonging to the family *Asteraceae,* and a storage step of storing the plant, from which the root portion has been removed, at a temperature of 20°C to 40°C for 24 hours or more in the presence of water". Further relevant prior art are US 5 216 836 A and M.A. Sherif et. al. "Split-root nutrition of sweetpotato in hydroponic systems" Acta Horticulturae, no. 401, 1 October 1995, pages 121-130.

### SUMMARY OF THE INVENTION

The present inventors have studied the method for producing a polyphenol compound-containing plant disclosed in JP2016-106621A and then found that there is room for further improvement in a content of a caffeoylquinic acid compound in the resulting plant.

Accordingly, an object of the present invention is to provide a method for producing a plant in order to obtain a plant having a high content of a caffeoylquinic acid compound.

As a result of extensive studies to achieve the foregoing objects, the present invention is defined by the appended claims. The content of the caffeoylquinic acid compound refers to the mass of the caffeoylquinic acid compound contained in a plant of unit mass (dry matter weight).

### DESCRIPTION OF THE PREFERRED EMBODIMENTS

Hereinafter, the present invention will be described in detail.

The description of the constituent elements described below may be made based on representative embodiments of the present invention, but the present invention is not limited to such embodiments.

In the present specification, a numerical range expressed using "to" refers to a range including numerical values described before and after "to" as a lower limit value and an upper limit value, respectively.

### [Method for producing plant]

The method for producing a plant is a method for producing a plant, including a step of growing at least one plant selected from the group consisting of a sweet potato and crown daisies (hereinafter, also referred to as "step 1"); and a step of subjecting the grown plant to nutriculture using a culture solution wherein the content of each of a nitrate ion and a phosphate ion in the culture solution is less than 10ppm by mass of the total mass of the culture solution (hereinafter, also referred to as "step 2").

The plant produced by the method for producing a plant having such a configuration has a high content of caffeoylquinic acid compound (hereinafter, also referred to as "CQA").

CQA is known to be contained in coffees, young barley leaves, sweet potatoes, and the like, and the expectation of application of CQA to functional foods is increasing due to physiological functions thereof. On the other hand, CQA in plants (particularly tricaffeoylquinic acid (TCQA), which has a high physiological activity) has a low content and has been a problem in use. According to the above-mentioned method for producing a plant, it is possible to produce a plant having a higher content of CQA (particularly TCQA) as compared with the related art method. According to the plant obtained in this way, application of CQA to functional foods, cosmetics, pharmaceuticals, and the like is facilitated in terms of safety backed by eating experience and the sense of security of consumers.

### [Step 1]

The step 1 is a step of growing at least one plant selected from the group consisting of a sweet potato and crown daisies.

The method for growing a plant comprises the step of subjecting the grown plant to nutriculture.

Examples of the nutriculture include solid medium culture, spray culture, and hydroponic culture.

Examples of the method for growing a plant, which depends on the type of plant, include, but are not limited to, Potatoes: "Growing potatoes and sweet potatoes taught by farmers", separate volume Modem Agriculture, Rural Culture Association Japan, October 2013, pp 92 to 96; Sweet potatoes: ibid., pp 152 to 175; Artichokes: A great way to grow vegetables(2014), supervised by Masaaki Hojo, Seibido Shuppan Co., Ltd., pp 8 to 9; Crown daisy: ibid., pp 34 to 35; Lettuce: ibid., pp 80 to 81; Burdock: ibid., pp 168 to 169; Taro: ibid., pp 170 to 171; Yacon: ibid., pp 186 to 187; and Water spinach: ibid., pp 212 to 213.

In particular, from the viewpoint that a plant grows larger and as a result, the yield of CQA (which represents the mass of CQA contained per unit of plant and is expressed in units of mg/plant) can be increased, it is preferable to grow the plant under sufficient light irradiation in the presence of water and fertilizer. In particular, in a case where sweet potato is used as a plant, CQA is contained in a large amount in the leaf of sweet potato and therefore it is more preferable to grow the plant under known conditions such that the leaf size per leaf is larger and the number of leaves per plant is larger.

In the present specification, the term "growth" means a state where the plant has become sufficiently large, specifically, the following state. For example, in a case of sweet potato, the growth means a state in which an aerial part of the sweet potato has developed four leaves (four nodes) or more, or a state in which the aerial part of the sweet potato has extended to 20 cm or more. In a case of crown daisy, the growth means a state in which the aerial part of the plant has grown to 10 cm or more.

Examples of conditions for adjustment include temperature, humidity, light (either sunlight or artificial light), CO₂ (CO₂ in the air may be used as it is, or the content of CO₂ in the atmosphere may be further increased therefrom), water (which may be sprinkled on soil or may be used in the form of nutriculture), and nutrients as needed (nitrogen, phosphoric acid, potassium, and the like can be used, and commercially available fertilizers can also be used). For the growth of plants, these conditions may be combined and adjusted as appropriate.

In addition, in a case where artificial light is used as a light source, for example, a fluorescent lamp or a light emitting diode (LED) can be used. In addition, among these light sources, there are some which are commercially available for use such as plant cultivation or plant growth, and it is also preferable to use these. In addition, in recent plant factories, LED lighting is also widely used from the viewpoint of reducing utility costs, extending the life of light sources, and the like. The light source in this case does not need to be white light in particular, and there are many uses of a combination of R (Red) light and B (Blue) light depending on the purpose. Further, those obtained by adding G (Green) light or near-infrared light thereto as required can also be used.

The conditions for growing a plant in the step 1 vary depending on the type of plant, but the day length is preferably 6 to 24 hours and more preferably 8 to 16 hours. In addition, the atmospheric temperature is preferably 10°C to 40°C and more preferably 15°C to 35°C. In addition, the humidity is not particularly limited and is preferably 30% to 100% at a temperature at which plants grow. The content of CO₂ in the atmosphere is preferably 400 to 2000 ppm by mass and more preferably 1000 to 1500 ppm by mass. The photosynthetic photon flux density is preferably 50 to 500 µmol/m²/sec and more preferably 80 to 450 µmol/m²/sec. In addition, each of the above-mentioned conditions can be appropriately selected depending on the type of plant.

The period of the step 1 is not particularly limited and may be a period until a plant reaches the "grown" state already described. Typically, the period of the step 1 is often about 7 to 60 days. For example, in a case where sweet potato seedlings are grown, the period of the step 1 is preferably 10 to 40 days.

Generally, CQA has a high content in the leaf stem portion, particularly in the leaves. Therefore, in the step 1, it is preferable to obtain a sufficient amount of leaves by growing the plant. In general, the yield of leaves can be expressed as an average value (g/plant) per plant of the yield of dried leaves obtained by removing the roots and stems from the grown plant and drying the remaining leaves. That is, the yield of leaves can be expressed as a total dry matter weight (g/plant) of leaves that can be obtained from one plant. The yield of leaves also varies depending on the type of plant, the cultivation conditions, the cultivation period, and the like. For example, in a case of hydroponic culture of sweet potato, the yield of leaves is preferably 1 g/plant or more, more preferably 2 g/plant or more, and still more preferably 3 g/plant or more.

### [Step 2]

The step 2 is a step of subjecting the grown plant to nutriculture using a culture solution which is substantially free of a nitrate ion and a phosphate ion. That is, the step 2 is a step of continuously cultivating the plant grown in the step 1.

In the present specification, the term "nutriculture" means a cultivation method for supplying a culture solution containing nutrients necessary for the growth of a plant to the plant without using soil, and includes solid medium culture using a solid medium, and hydroponic culture and spray culture without using a solid medium. Among these, hydroponic culture is preferable from the viewpoint of easier control of nutrients given to plants. The method for nutriculture in the step 2 is not particularly limited as long as a culture solution substantially free of a nitrate ion and a phosphate ion is used as the culture solution, and a known method can be used. Hereinafter, a case of hydroponic culture will be described as an example, but the step 2 according to the embodiment of the present invention is not limited to the following.

The culture solution used in the step 2 is substantially free of a nitrate ion and a phosphate ion. The phrase "substantially free of a nitrate ion and a phosphate ion" means that the content of each of the nitrate ion and the phosphate ion is less than 10 ppm by mass with respect to a total mass of the culture solution in a case of being measured using an ion chromatograph, in which it is preferably less than 5.0 ppm by mass and more preferably less than 1.0 ppm by mass. In general, a culture solution (so-called liquid fertilizer) used in nutriculture (typically hydroponic culture) often contains about 100 to 1000 ppm by mass of nitrate ions and about 30 to 200 ppm by mass of phosphate ions. That is, the culture solution used in the present step has a nitrate ion and phosphate ion content of about 1/10 to 1/1000 as compared with the common liquid fertilizer.

It is presumed that production of CQA (particularly production of TCQA) was promoted in a plant by limiting the supply of nitrate ions and phosphate ions necessary for the growth of the plant in the step 2.

In general, water is often used as a solvent for the culture solution. In this case, the content of water in the culture solution is not particularly limited, but is preferably 90% by mass or more, more preferably 95% by mass or more, and still more preferably 99% by mass or more with respect to the total mass of the culture solution.

Pure water, distilled water, or tap water with components adjusted as necessary can be used as the culture solution. In addition, the term "tap water" in the present specification refers to tap water satisfying general tap water quality standards (for example, tap water whose Mn ion content is 50 ppb by mass or less in the total mass of tap water).

From the viewpoint that a superior effect of the present invention can be obtained, the culture solution contains a metal ion of at least one metal selected from the group consisting of B, Mn, Zn, Cu, and Mo (hereinafter, referred to as "first ion"). In addition, from the viewpoint that a more superior effect of the present invention can be obtained, the culture solution contains each ion of B, Mn, Zn, Cu, and Mo as the first ion.

In a case where one type of first ion is contained in the culture solution, the content of the first ion is preferably 10 ppm by mass or less and more preferably 1.0 ppm by mass or less with respect to the total mass of the culture solution. In a case where two or more types of first ions are contained in the culture solution, the content of each first ion is preferably 10 ppm by mass or less and more preferably 1.0 ppm by mass or less with respect to the total mass of the culture solution.

In the present specification, the state in which the culture solution contains a certain first ion means that the culture solution contains 20 ppb by mass or more of the first ion with respect to the total mass of the culture solution, in which the culture solution preferably contains 50 ppb by mass or more of the first ion and more preferably more than 50 ppb by mass of the first ion.

In a case where the culture solution contains at least one type of first ion (or two or more types of first ions) and the content thereof (or the content of each) is 1.0 ppm by mass or less, the content of CQA (especially TCQA) in the resulting plant becomes higher.

The culture solution preferably contains at least Mn ions among the first ions. In this case, the content of Mn ions is preferably more than 50 ppb by mass and 1.0 ppm by mass or less with respect to the total mass of the culture solution. In a case where the content of Mn ions in the culture solution is within the above range, a superior effect of the present invention can be obtained.

In addition, from the viewpoint that a superior effect of the present invention can be obtained, the culture solution preferably contains at least one ion selected from the group consisting of K⁺, Mg²⁺, Ca²⁺, SO₄²⁻, and Cl⁻ (hereinafter, referred to as "second ion"), and more preferably contains two or more types of second ions.

In addition, from the viewpoint that a more superior effect of the present invention can be obtained, the culture solution still more preferably contains each ion of K⁺, Mg²⁺, Ca²⁺, SO₄²⁻, and Cl⁻ as the second ion.

The content of the second ion in the culture solution is not particularly limited. In a case where one type of second ion is contained in the culture solution, the content of the second ion is preferably 0.1 ppm by mass or more, more preferably 1.0 ppm by mass or more, and still more preferably 5.0 ppm by mass or more, and is preferably 500 ppm by mass or less, more preferably 300 ppm by mass or less, still more preferably 200 ppm by mass or less, and particularly preferably 150 ppm by mass or less. In addition, in a case where two or more types of second ions are contained in the culture solution, it is preferable that the content of at least one type of second ion is within the above range and it is more preferable that the content of each second ion is within the above range.

In a case where the content of at least one type of second ion in the culture solution is 1.0 to 300 ppm by mass, a superior effect of the present invention can be obtained, and in a case where the content of each second ion in the culture solution is 1.0 to 300 ppm by mass, a more superior effect of the present invention can be obtained.

In the present specification, the state in which the culture solution contains a certain second ion means that the content of the second ion is equal to or more than the lower limit of quantification (for example, 0.1 ppm by mass or more for Mg²⁺) in a case of being measured by the method described in the Examples.

In addition, from the viewpoint that a superior effect of the present invention can be obtained, the culture solution preferably contains K⁺, Mg²⁺, Ca²⁺, SO₄²⁻, and Cl⁻, and the content of each ion with respect to the total mass of the culture solution is preferably 5.0 ppm by mass or more for K⁺, 5.0 ppm by mass or more for Mg²⁺, 15 ppm by mass or more for Ca²⁺, 10 ppm by mass or more for SO₄²⁻, and 5.0 ppm by mass or more for Cl⁻, respectively.

The culture solution preferably contains one or more types of first ions and one or more types of second ions, more preferably contains all types of first ions and one or more types of second ions, and still more preferably contains all types of first ions and all types of second ions. In this case, the content of each first ion and each second ion in the culture solution is as described above.

The culture solution can be prepared by purifying pure water, distilled water, tap water, or the like and then adding, for example, a component serving as an ion source such that the content of each of the first ions and the second ions is within the above range.

In a case where the culture solution is prepared using tap water, the culture solution may be prepared using ions contained in the tap water as a component of the culture solution, or a desired culture solution may be prepared by removing the ions in the tap water and then adding the same components again.

In a case where the step 1 is carried out by soil culture, the step 2 may be carried out in such a manner that the grown plant is transplanted to a device for nutriculture and then the above-mentioned predetermined culture solution is supplied thereto. In addition, in a case where the step 1 is carried out by nutriculture, the above-mentioned culture solution may be supplied to the plant in place of the water and fertilizer which were used in the step 1.

Other conditions in the step 2 (such as content of CO₂ in the air, sunshine, day length, temperature, and humidity) are not particularly limited, and may be the same as described in the step 1. In particular, the day length is preferably less than 17 hours, and more preferably 15 hours or less. In the production method described above, a plant having a high content of CQA can be produced more efficiently in a case where the day length in the step 2 is less than 17 hours.

The period of the step 2 is not particularly limited, but is generally preferably 5 days or longer, more preferably 7 days or longer, and still more preferably 10 days or longer from the viewpoint that a larger amount of CQA is produced in the plant. In addition, the period of step 2 is not particularly limited, but is generally preferably 30 days or shorter and more preferably 25 days or shorter from the viewpoint that CQA can be recovered more efficiently.

According to the method for producing a plant including the steps 1 and 2 described above, a plant having a high content of CQA (particularly TCQA) can be obtained.

In the present specification, the term "CQA" refers to a caffeoylquinic acid compound, and examples of the caffeoylquinic acid compound include monocaffeoylquinic acids (3-O-caffeoylquinic acid, 4-O-caffeoylquinic acid, 5-O-caffeoylquinic acid, and 1-O-caffeoylquinic acid), dicaffeoylquinic acids (3,4-O-dicaffeoylquinic acid, 3,5-O-dicaffeoylquinic acid, 4,5-O-dicaffeoylquinic acid, 1,3-O-dicaffeoylquinic acid, 1,4-O-dicaffeoylquinic acid, and 1,5-0-dicaffeoylquinic acid), tricaffeoylquinic acids (3,4,5-O-tricaffeoylquinic acid, 1,4,5-0-tricaffeoylquinic acid, 1,3,5-O-tricaffeoylquinic acid, and 1,3,4-O-tricaffeoylquinic acid), and tetracaffeoylquinic acids (1,3,4,5-O-tetracaffeoylquinic acid).

The above-mentioned method for producing a plant makes it possible to obtain a plant having a high content of CQA, and is particularly useful from the viewpoint that a plant having a high content of tricaffeoylquinic acid (TCQA) can be obtained. TCQA is known to have particularly strong physiological activity among CQAs, but plants containing TCQA are limited and the content of TCQA in those plants is very low. On the other hand, according to the above-mentioned method for producing a plant, a plant having a high content of TCQA can be obtained, which is thus useful.

The plant obtained by the above-mentioned method for producing a plant has a high content of CQA per unit mass and a large yield of CQA per unit plant. Therefore, a large amount of CQA (particularly TCQA) can be recovered from the plant. In a case where the recovered CQA is added to food, for example, a food having physiological functions can be produced. The method for recovering CQA from the plant obtained by the above-mentioned method for producing a plant is not particularly limited. For example, the method for extracting CQA from a plant may be carried out in such a manner that a plant or a dried product of the plant is left as it is or pulverized, water, an organic solvent, or a mixture thereof is then added thereto, followed by stirring or the like, and the resulting extract is subjected to concentration, dryness, or purification depending on the purpose.

In this case, a higher content of CQA in the plant provides a greater amount of CQA obtained by one extraction operation, and therefore the cost required for collecting a unit amount of CQA is reduced. For example, upon comparing a case where the content of CQA in the plant is about 0.01% by mass with a case where the content of CQA in the plant is about 0.1% by mass, there is theoretically a 10-fold difference therebetween in amount of CQA obtained at one time with the same production facility. In a case where the production facilities are the same, the cost of one operation is almost the same. Therefore, CQA can be recovered at a lower cost in a case where the content of CQA in the plant is high.

In addition, the plant obtained by the above-mentioned method for producing a plant, especially a leaf thereof, has a high content of CQA (especially TCQA) and therefore can be used as a functional food as it is or in admixture with other materials.

In addition, the plant obtained by the above-mentioned method for producing a plant may be used after being dried. Generally, use of the plant after being dried is preferable because the components in the plant are concentrated by drying. Furthermore, CQA may be extracted from the dried plant and then used. The method for extracting CQA is not particularly limited, and a known method can be used.

In general, the content of CQA in plants is often about 0.1% to 2.0% by mass with respect to the dry matter weight. On the other hand, the content of CQA in the plant obtained by the above-mentioned method for producing a plant is preferably 4.0% by mass or more, more preferably 6.0% by mass or more, and still more preferably 8.0% by mass or more with respect to the total mass (dry matter weight) of the plant. In addition, in a case where it is TCQA, the content thereof is preferably 0.1% by mass or more, more preferably 0.3% by mass or more, and still more preferably 0.6% by mass or more with respect to the total mass (dry matter weight) of the plant. In addition, in a case where it is a dicaffeoylquinic acid compound (DCQA), the content thereof is preferably 2.0% by mass or more, more preferably 4.0% by mass or more, and still more preferably 6.0% by mass or more with respect to the total mass (dry matter weight) of the plant.

The plant obtained by the above-mentioned production method has a high content of CQA. For example, in a case where the obtained plant is sweet potato, the content of DCQA is preferably 1.2 times or higher, more preferably 1.5 times or higher, and still more preferably 2.0 times or higher as compared with the sweet potato produced by a conventional method. The content of TCQA is preferably 5.0 times or higher, more preferably 10 times or higher, and still more preferably 30 times or higher. The content of CQA is preferably 1.5 times or higher, more preferably 2.0 times or higher, and still more preferably 2.5 times or higher.

### [Method for producing processed plant product]

The method for producing plant is a method for producing a processed plant product, including removing a root portion of the plant obtained by the production method described above to obtain a leaf stem portion of the plant, and drying the leaf stem portion in a state where moisture is not supplied to obtain a processed plant product. In the present specification, the term "processed plant product" refers to a product produced by the above-mentioned production method.

The method for removing the root portion from the plant is not particularly limited, and the root portion and the leaf stem portion of the plant may be separated from each other to obtain the leaf stem portion. In addition, in the present specification, the term "leaf stem portion" refers to a combination of a leaf portion and a stem portion of a plant, and is synonymous with the aerial part in a plant grown by soil culture.

Examples of the method for obtaining the leaf stem portion include cutting the root portion with an edged tool or the like, and folding the root portion by hand. In a case of cutting the root portion with an edged tool or the like, the cutting position may be appropriately adjusted depending on the type of plant.

In a case where the cutting position is in the middle of the stem, the method for obtaining the leaf stem portion may be, for example, a form in which cutting is carried out at a right angle to the stem or at an inclination angle to the stem using an edged tool such as a sharp pruning shears, a pruning knife, a sickle, a hedge trimmer, or a chainsaw. In a case of cutting a stem with an inclination angle, the inclination angle is not particularly limited.

In addition, in the production step of the processed plant product, the generation of a new root from the leaf stem portion after the removal of the root portion does not become a hindrance for obtaining the effect of the present invention.

### (Drying step)

The method for producing a processed plant product includes a drying step of drying a leaf stem portion in a state where moisture is not supplied. The method for drying the leaf stem portion in a state where moisture is not supplied is not particularly limited and may be, for example, a method of taking out the leaf stem portion of the plant from a device for nutriculture or the like and drying it in a space where temperature and humidity are controlled. In the present specification, the phrase "moisture is not supplied" means that moisture necessary for the growth of a plant is not supplied, and specifically means that no culture solution is supplied.

The temperature and humidity at the time of drying are not particularly limited, but the temperature at the time of drying is preferably 20°C to 35°C and more preferably 25°C to 30°C from the viewpoint that a processed plant product having a superior effect of the present invention can be obtained. The relative humidity is preferably 30% to 95% and more preferably 50% to 90%. In a case where the temperature and humidity are within the above ranges, a processed plant product having a higher content of CQA can be obtained.

In addition, the number of days for the drying step is preferably 3 to 16 days, more preferably 3 to 15 days, still more preferably 4 to 12 days, and particularly preferably 5 to 10 days.

In a case where the temperature at the time of drying is 20°C or higher, the progress of the production reaction of CQA in the plant becomes faster, and therefore a processed plant product having a superior effect of the present invention can be obtained. On the other hand, in a case where the temperature at the time of drying is 35°C or lower, the activity of the CQA-degrading enzyme in the plant is lower and as a result, the purified CQA is more difficult to degrade and therefore a processed plant product having a higher content of CQA is obtained.

In a case where the humidity at the time of drying is 30% or more, the production of CQA and the drying of the plant tend to proceed in a more balanced manner. In addition, in a case where the humidity at the time of drying is 95% or less, the drying stress on the plant is likely to increase, and the production of CQA in the plant is further promoted. As a result, a processed plant product having a higher content of CQA is obtained.

In addition, the drying method is not particularly limited and may be, for example, a method of leaving a leaf stem portion in a space containing water vapor.

In the drying step, the leaf stem portion may be irradiated with light. The light source for irradiating the leaf stem portion with light is not particularly limited, and examples thereof include sunlight, a fluorescent lamp, a xenon lamp, a mercury lamp, a halogen lamp, and an LED.

The light irradiation time per day is preferably 5 to 24 hours, more preferably 8 to 16 hours, and still more preferably 10 hours to 14 hours.

### Examples

Hereinafter, the present invention will be described in more detail with reference to the Examples. The materials, amounts used, ratios, treatment details, treatment procedures, and the like shown in the following Examples can be changed as appropriate without departing from the spirit of the present invention. Therefore, the scope of the present invention should not be construed as being limited by the Examples shown below.

### [Test Example 1: Comparative Example 1 and Example 1]

In order to confirm that the effect of the present invention can be obtained according to the method for producing a plant including the second step, tests were carried out under the following conditions.

### (First step)

As the first step, sweet potato seedlings were grown under the following cultivation conditions. That is, 10 L of pure water, and 8 ml of liquid A and 8 ml of liquid B of a liquid fertilizer (HYPONICA Liquid Fertilizer, manufactured by Kyowa Chemical Co., Ltd.) were added to a hydroponic culture device (HOME HYPONICA 601, manufactured by Kyowa Co., Ltd.), and then six sweet potato seedlings were planted therein. The average mass of the seedlings at this time was 2.0 g/seedling (fresh weight). The cultivation was carried out under the conditions of 30°C and 50% humidity, with the content of CO₂ in the atmosphere being the same as in a normal atmosphere. That is, CO₂ was not additionally supplied. Using an LED (DPT "RB120Q33, 40 type, manufactured by Showa Denko K.K.) at a photosynthetic photon flux density of 300 µmol/m²/sec (R light/B light ratio is 2/1) as a light source for illumination, the plants were cultivated for 14 days in a light cycle of 12 hours on and 12 hours off using a timer. The average mass of the plants (sweet potatoes) at the end of the first step was 28.0 g/plant (fresh weight). In addition, this cultivation method was described as "Hydroponic, 30°C, 50%, LED 300 µmol" in Table 1.

The sweet potato at the end of the first step had a DCQA content of 2.73% by mass of dry matter weight, a zero content of TCQA and a total CQA content of 3.60% by mass of dry matter weight in the leaves thereof, and a low average yield of leaves of 1.26 g/sweet potato (dry matter weight). The results are shown in the column of Comparative Example 1 in Table 1.

### (Second step)

Next, with respect to the sweet potatoes after the completion of the first step, the entire amount of the liquid fertilizer in the hydroponic culture device was discarded, 10 L of pure water was added in place thereof, and the cultivation was further continued for 14 days under the same temperature, humidity, and light conditions.

The average mass of sweet potatoes at the end of the second step was 31.8 g/plant (fresh weight). The average yield of leaves per sweet potato recovered was 1.35 g/plant (dry matter weight). The leaves of sweet potato had a DCQA content of 3.87% by mass of dry matter weight, a TCQA content of 0.25% by mass of dry matter weight, and a total CQA content of 6.03% by mass of dry matter weight, which were significantly improved as compared with Comparative Example 1. The results are shown in the column of Example 1 in Table 1. In addition, this cultivation method was described as "30°C, 50%, LED 300 µmol" in Table 1.

From the results of Test Example 1, it was found that the sweet potato produced by the production method of Example 1 including the second step had the effect of the present invention. On the other hand, it was found that the sweet potato produced by the production method of Comparative Example 1 not including the second step had no effect of the present invention.

### [Test Example 2: Comparative Example 2 and Examples 2 to 7]

In order to confirm the effect of the difference in the components of the culture solution used in the second step on the effect of the present invention, tests were carried out under the following conditions.

### (First step)

As the first step, sweet potato seedlings were grown under the same cultivation conditions as in the first step of Test Example 1. Test Example 2 was different from Test Example 1 in the date and time in a case where the test was carried out. The sweet potato after the completion of the first step had a DCQA content of 2.47% by mass of dry matter weight, a TCQA content of 0.01% by mass of dry matter weight and a total CQA content of 3.15% by mass of dry matter weight in the leaves thereof, and a low yield of leaves of 1.60 g/plant (dry matter weight). The results are shown in the column of Comparative Example 2 in Table 1.

### (Second step)

Next, with respect to the sweet potatoes after the completion of the first step, the entire amount of the liquid fertilizer in the hydroponic culture device was discarded, the culture solution described in the column of "Culture solution" in Table 1 was added in place thereof, and the cultivation was further continued for 14 days under the same temperature, humidity, and light conditions as in the second step of Test Example 1 (for Example 4, the cultivation was continued for 13 days). The measurement results such as content of TCQA in the leaves of the sweet potato after the completion of the second step are shown in the columns of Examples 2 to 7 in Table 1.

In addition, each culture solution was made as follows: pure water was produced using tap water as raw water and using an ion exchange resin, and Na₂B₄O₅(OH)₄·8H₂O, MnCl₂·4H₂O, ZnSO₄·7H₂O, CuSO₄·5H₂O, Na₂MoO₄·2H₂O, KCl, or CaCl₂ was appropriately dissolved in the pure water such that the content of each ion in the culture solution was as shown in Table 2. In addition, the content of each ion in the culture solution was measured by the method which will be described later.

In addition, Table 2 shows the tap water used as raw water and individual components contained in the culture solution after the preparation thereof.

From the results of Test Example 2, the sweet potato produced by the production method of Example 3 in which the culture solution contains the first ion had a higher content of DCQA and a higher content of total CQA in the leaves and a higher yield of leaves as compared with the sweet potato produced by the production method of Example 2.

In addition, the sweet potato produced by the production method of Example 4 in which the culture solution contains the second ion had a higher content of DCQA and a higher content of total CQA in the leaves and a higher yield of leaves as compared with the sweet potato produced by the production method of Example 2.

In addition, the sweet potato produced by the production methods of Examples 5 to 7 in which the culture solution contains the first ion and the second ion had a higher content of DCQA, a higher content of TCQA and a higher content of total CQA in the leaves and a higher yield of leaves as compared with the sweet potato produced by the production method of Example 2.

### [Test Example 3: Comparative Example 3 and Examples 8 to 11]

In order to confirm the effect of the difference in the components of the culture solution used in the second step, to further carry out the production of a processed plant product, and to confirm the effect of the conditions of the drying step on the CQA content of the processed plant product, tests were carried out under the following conditions.

### (First step)

As the first step, sweet potato seedlings were grown under the same cultivation conditions as in Test Example 1. Test Example 3 was different from the foregoing Test Examples in the date and time in a case where the test was carried out. The sweet potato after the completion of the first step had a DCQA content of 2.50% by mass of dry matter weight, a TCQA content of 0.01% by mass of dry matter weight and a total CQA content of 3.36% by mass of dry matter weight in the leaves thereof, and a low yield of leaves of 1.66 g/plant (dry matter weight). The results are shown in the column of Comparative Example 3 in Table 1.

### (Second step)

Next, with respect to the sweet potatoes after the completion of the first step, the entire amount of the liquid fertilizer in the hydroponic culture device was discarded, the culture solution described in the column of "Culture solution" in Table 1 was added in place thereof, and the cultivation was further continued for 14 days under the same temperature, humidity, and light conditions as in the second step of Test Example 1 (for Example 9, the cultivation was continued for 15 days). The content of TCQA and the like in the leaves of the sweet potato after the completion of the second step are shown in the columns of Example 8 and Example 10 in Table 1.

### (Production of processed plant product)

The portion of the sweet potato stem that had not been immersed in the culture solution (the leaf stem portion, which is synonymous with the "aerial part") after the completion of the second step was cut with scissors, and the leaf stem portion was placed on a thermostat adjusted to the temperature and humidity described in Table 1 and then dried for the period described in Table 1 to produce a processed plant product. The TCQA content and the like of the processed plant product thus produced are shown in the columns of Example 9 and Example 11 in Table 1.

From the results of Test Example 3, the processed plant products produced by the production methods of Example 9 and Example 11 had a higher content of each of DCQA, TCQA and total CQA as compared with the leaves of the sweet potatoes produced by the production methods of Example 8 and Example 10, in which the culture solution used in the second step was the same as that in Example 9 and Example 11.

In addition, the leaves of the sweet potato produced by the production method of Example 10 and the processed plant product produced by the production method of Example 11 had a higher content of each of DCQA, TCQA and total CQA and a higher yield of leaves as compared with the leaves of the sweet potato produced by the production method of Example 8 and the processed plant product produced by the production method of Example 9, in which the culture solution used in the second step was different from that in Example 10 and Example 11.

### [Test Example 4: Comparative Examples 4 to 6 and Examples 12 to 15]

In order to confirm the effect of the presence or absence of the second step, to carry out the production of a processed plant product, and to confirm the effect of the conditions of the drying step on the CQA content of the processed plant product, tests were carried out under the following conditions.

### (First step)

As the first step, sweet potato seedlings were grown under the same cultivation conditions as in Test Example 1. Test Example 4 was different from the foregoing Test Examples in the date and time in a case where the test was carried out. The sweet potato after the completion of the first step had a DCQA content of 2.82% by mass of dry matter weight, a TCQA content of 0.02% by mass of dry matter weight and a total CQA content of 3.62% by mass of dry matter weight in the leaves thereof, and a low yield of leaves of 1.12 g/plant (dry matter weight). The results are shown in the column of Comparative Example 4 in Table 1. Similarly, the results in a case where the number of cultivation days in the first step was 26 days are shown in the column of Comparative Example 5. The results in a case of producing a processed plant product without carrying out the second step based on the sweet potato obtained in the same manner as in Comparative Example 4 are shown in the column of Comparative Example 6.

### (Second step)

Next, with respect to the sweet potatoes after the completion of the first step, the entire amount of the liquid fertilizer in the hydroponic culture device was discarded, the culture solution described in the column of "Culture solution" in Table 1 was added in place thereof, and the cultivation was further continued for 13 days or 14 days under the same temperature, humidity, and light conditions as in the second step of Test Example 1. The content of TCQA and the like in the leaves of the sweet potato after the completion of the second step are shown in the columns of Example 12 and Example 14 in Table 1.

### (Production of processed plant product)

The portion of the sweet potato stem that had not been immersed in the culture solution (the leaf stem portion, which is synonymous with the "aerial part") after the completion of the second step was cut with scissors, and the leaf stem portion was placed on a thermostat adjusted to the temperature and humidity described in Table 1 and then dried for the period described in Table 1 to produce a processed plant product. The TCQA content and the like of the processed plant product thus produced are shown in the columns of Example 13 and Example 15 in Table 1.

From the results of Test Example 4, the processed plant products produced by the production methods of Example 13 and Example 15 had a higher content of each of DCQA, TCQA and total CQA as compared with the leaves of the sweet potatoes produced by the production methods of Example 12 and Example 14, in which the culture solution used in the second step was the same as that in Example 13 and Example 15.

In addition, the sweet potato produced by the production method of Comparative Example 5 had a higher content of each of DCQA and total CQA in the leaves thereof and a higher yield of leaves as compared with Comparative Example 4 due to an increased number of cultivation days in the first step; but had a lower content of each of DCQA, TCQA and total CQA and exhibited a large difference especially in the content of TCQA as compared with the leaves of the sweet potatoes produced by the production methods of Example 12 and Example 14, in which the number of the cultivation days including the second step was substantially the same as that in Comparative Examples 5.

In addition, the processed plant product produced by the production method of Comparative Example 6 had a lower content of each of DCQA, TCQA and total CQA as compared with the processed plant products produced by the production methods of Example 13 and Example 15 including the second step.

### [Test Example 5: Examples 16 to 23]

In order to confirm the effect of the conditions of the drying step on the CQA content of the processed plant product in the production of a processed plant product, tests were carried out under the following conditions.

### (First step)

As the first step, sweet potato seedlings were grown under the same cultivation conditions as in Test Example 1. Test Example 5 was different from the foregoing Test Examples in the date and time in a case where the test was carried out.

### (Second step)

Next, with respect to the sweet potatoes after the completion of the first step, the entire amount of the liquid fertilizer in the hydroponic culture device was discarded, the culture solution described in the column of "Culture solution" in Table 1 was added in place thereof, and the cultivation was further continued for 13 days under the same temperature, humidity, and light conditions as in the first step.

### (Production of processed plant product)

The leaf stem portion of the sweet potato after the completion of the second step was cut with scissors, and the leaf stem portion was placed on a thermostat adjusted to the temperature and humidity described in Table 1 and then dried for the period described in Table 1 to produce a processed plant product. The TCQA content and the like of the processed plant product thus produced are shown in the columns of Examples 16 to 23 in Table 1.

### [Test Example 6: Examples 24 to 30]

In order to confirm the effect of the conditions of the drying step on the CQA content of the processed plant product in the production of a processed plant product, tests were carried out under the following conditions.

### (First step)

As the first step, sweet potato seedlings were grown under the same cultivation conditions as in Test Example 1. Test Example 6 was different from the foregoing Test Examples in the date and time in a case where the test was carried out.

### (Second step)

Next, with respect to the sweet potatoes after the completion of the first step, the entire amount of the liquid fertilizer in the hydroponic culture device was discarded, the culture solution described in the column of "Culture solution" in Table 1 was added in place thereof, and the cultivation was further continued for 15 days under the same temperature, humidity, and light conditions as in the first step.

### (Production of processed plant product)

The leaf stem portion of the sweet potato after the completion of the second step was cut with scissors, and the leaf stem portion was placed on a thermostat adjusted to the temperature and humidity described in Table 1 and then dried for the period described in Table 1 to produce a processed plant product. The TCQA content and the like of the processed plant product thus produced are shown in the columns of Examples 24 to 30 in Table 1.

### [Test Example 7: Examples 31 to 33]

In order to confirm the effect of the temperature and humidity conditions in the first step and the second step on the CQA content of the plant, tests were carried out under the following conditions.

### <Example 31>

### (First step)

As the first step, sweet potato seedlings were grown under the following cultivation conditions. That is, 10 L of pure water, and 8 ml of liquid A and 8 ml of liquid B of a liquid fertilizer (HYPONICA Liquid Fertilizer, manufactured by Kyowa Chemical Co., Ltd.) were added to a hydroponic culture device (HOME HYPONICA 601, manufactured by Kyowa Co., Ltd.), and then the sweet potato seedlings were planted therein. Using a fluorescent lamp (BIOLUX FL40SBR, a fluorescent lamp for growing plants manufactured by Toshiba Corporation) at a photosynthetic photon flux density of 300 µmol/m²/sec as a light source for illumination, the plants were cultivated for 14 days in a light cycle of 12 hours on and 12 hours off.

It should be noted that the temperature of 30°C and the humidity of 70% were set for 12 hours in a case where the illumination was turned on; and the temperature of 25°C and the humidity of 90% were set for 12 hours in a case where the illumination was turned off. The cultivation was carried out under the same conditions as in Test Example 1, except for the above-mentioned temperature and humidity conditions.

This cultivation method was described as "Hydroponic, daytime: 30°C, 70%, night: 25°C, 90%, fluorescent lamp 300 µmol" in Table 1.

In addition, Test Example 7 was different from the foregoing Test Examples in the date and time in a case where the test was carried out.

### (Second step)

Next, with respect to the sweet potatoes after the completion of the first step, the entire amount of the liquid fertilizer in the hydroponic culture device was discarded, 10 L of pure water was added in place thereof, and the cultivation was further continued for 15 days under the same temperature, humidity, and light conditions as in the first step. The results such as content of TCQA (% by mass with respect to dry matter weight) in the leaves of the resulting sweet potato are shown in the column of Example 31 in Table 1. This cultivation method was described as "Daytime: 30°C, 70%, night: 25°C, 90%, fluorescent lamp 300 µmol" in Table 1.

### <Example 32>

### (First step)

As the first step, sweet potato seedlings were grown under the following cultivation conditions. That is, 10 L of pure water, and 8 ml of liquid A and 8 ml of liquid B of a liquid fertilizer (HYPONICA Liquid Fertilizer, manufactured by Kyowa Chemical Co., Ltd.) were added to a hydroponic culture device (HOME HYPONICA 601, manufactured by Kyowa Co., Ltd.), and then the sweet potato seedlings were planted therein. Using a fluorescent lamp (BIOLUX FL40SBR, a fluorescent lamp for growing plants manufactured by Toshiba Corporation) at a photosynthetic photon flux density of 450 µmol/m²/sec as a light source for illumination, the plants were cultivated for 14 days in a light cycle of 12 hours on and 12 hours off. With respect to the cultivation conditions, the temperature was 35°C, the humidity was 70%, and CO₂ gas was supplied to adjust the content of CO₂ in the atmosphere to 1500 ppm (by volume). The cultivation was carried out under the same conditions as in Test Example 1, except for the above-mentioned temperature, humidity, and CO₂ gas conditions. This cultivation method was described as "Hydroponic, 35°C, 50%, fluorescent lamp 450 µmol, CO₂: 1500 ppm" in Table 1.

### (Second step)

Next, with respect to the sweet potatoes after the completion of the first step, the entire amount of the liquid fertilizer in the hydroponic culture device was discarded, 10 L of the culture solution described in Table 1 was added in place thereof, and the cultivation was further continued for 15 days under the same temperature, humidity, and light conditions as described above. The results such as content of TCQA (% by mass with respect to dry matter weight) in the leaves of the resulting sweet potato are shown in the column of Example 32 in Table 1. This cultivation method was described as "35°C, 50%, fluorescent lamp 450 µmol, CO₂: 1500 ppm" in Table 1.

### <Example 33>

### (Production of processed plant product)

The leaf stem portion of the sweet potato after the completion of the second step of Example 32 was cut with scissors, and the leaf stem portion was placed on a thermostat adjusted to the temperature and humidity described in Table 1 and then dried for the period described in Table 1 to produce a processed plant product. The TCQA content and the like of the processed plant product thus produced are shown in the column of Example 33 in Table 1.

### [Test Example 8: Comparative Example 7 and Examples 34 and 35]

In order to confirm the effect of the cultivation method in the first step on the CQA content of the plant, tests were carried out under the following conditions.

### (First step)

As the first step, sweet potatoes were cultivated under the following cultivation conditions. That is, sweet potato seedlings were planted in a pot containing Golden granular culture soil (manufactured by Iris Ohyama Inc.), and cultivated at a temperature of 30°C and a humidity of 45% in the same manner as in Test Example 1 using a fluorescent lamp (BIOLUX FL40SBR, a fluorescent lamp for growing plants manufactured by Toshiba Corporation) as a light source for illumination, except that the photosynthetic photon flux density was 70 mol/m²/sec. The sweet potato after the completion of the first step had a TCQA content of 0.11% by mass of dry matter weight and a total CQA content of 2.47% by mass of dry matter weight in the leaves thereof, and a low yield of leaves of 0.24 g/plant (dry matter weight). The results are shown in the column of Comparative Example 7 in Table 1. Test Example 8 was different from the foregoing Test Examples in the date and time in a case where the test was carried out.

### (Second step)

A portion in a predetermined growth state was periodically collected from the sweet potato after the completion of the first step (for this reason, it is described as "Continued" in the column of "Days" in "First step" in Table 1) and planted in a hydroponic culture device (HOME HYPONICA 601, manufactured by Kyowa Co., Ltd.) containing the culture solution described in Table 1. This was followed by cultivation at a temperature of 30°C and a humidity of 50% under the same conditions as in the second step of Test Example 1, using an LED at a photosynthetic photon flux density of 300 mol/m²/sec as a light source for illumination.

The content of TCQA and the like in the leaves of the sweet potato after the completion of the second step are shown in the columns of Example 34 and Example 35 in Table 1.

### [Test Example 9: Comparative Example 8 and Examples 36 and 37]

Tests were carried out under the following conditions.

### (First step)

As the first step, KOGANESENGAN (sweet potato common cultivar, simply described as "KOGANESENGAN" in Table 1) was cultivated under the following cultivation conditions. That is, KOGANESENGAN sweet potato seedlings were planted in a hydroponic culture device (HOME HYPONICA 601, manufactured by Kyowa Co., Ltd.) to which 10 L of pure water, and 8 ml of liquid A and 8 ml of liquid B of a liquid fertilizer (HYPONICA Liquid Fertilizer, manufactured by Kyowa Chemical Co., Ltd.) were added. This was followed by cultivation at a temperature of 30°C and a humidity of 60% under the same conditions as in Test Example 1, using a fluorescent lamp (BIOLUX FL40SBR, a fluorescent lamp for growing plants manufactured by Toshiba Corporation) as a light source for illumination, except that the photosynthetic photon flux density was 140 µmol/m²/sec. The KOGANESENGAN sweet potato after the completion of the first step had a DCQA content of 2.22% by mass of dry matter weight, a TCQA content of 0.02% by mass of dry matter weight and a total CQA content of 2.86% by mass of dry matter weight in the leaves thereof, and a low yield of leaves of 2.11 g/plant (dry matter weight). The results are shown in the column of Comparative Example 8 in Table 1.

In addition, this cultivation method was described as "Hydroponic, 30°C, 60%, fluorescent lamp 140 µmol" in Table 1.

### (Second step)

Next, with respect to the KOGANESENGAN sweet potato after the completion of the first step, the entire amount of the liquid fertilizer in the hydroponic culture device was discarded, 10 L of pure water was added in place thereof, and the cultivation was further continued for 14 days under the same temperature, humidity, and light conditions as described above. The results such as content of TCQA in the leaves of the resulting KOGANESENGAN sweet potato are shown in the column of Example 36 in Table 1. In addition, this cultivation method was described as "30°C, 60%, fluorescent lamp 140 µmol" in Table 1.

### (Production of processed plant product)

The leaf stem portion of the KOGANESENGAN sweet potato after the completion of the second step was cut with scissors, and the leaf stem portion was placed on a thermostat adjusted to the temperature and humidity described in Table 1 and then dried for the period described in Table 1 to produce a processed plant product. The TCQA content and the like of the processed plant product thus produced are shown in the column of Example 37 in Table 1.

### [Test Example 10: Comparative Example 9, and Examples 38 and 39]

Tests were carried out under the following conditions.

### (First step)

Crown daisy which was cultivated in a natural environment without adjusting the temperature, humidity, light quantity, and the like in a common outdoor field and had a predetermined growth state was procured. The crown daisy had a DCQA content of 0.43% by mass of dry matter weight, a zero content of TCQA, a total CQA content of 0.61% by mass of dry matter weight, and a low yield of leaves of 0.54 g/plant. The results are shown in the column of Comparative Example 9 in Table 1. In addition, this cultivation method was described as "Soil culture, outdoor field" in Table 1.

### (Second step)

Next, the crown daisy was planted in a hydroponic culture device (HOME HYPONICA 601, manufactured by Kyowa Co., Ltd.) containing 10 L of the culture solution described in Table 1. Then, the crown daisy was cultivated for 6 days at a temperature of 23°C and a humidity of 70% in the same manner as in Test Example 1 using a fluorescent lamp (BIOLUX FL40SBR, a fluorescent lamp for growing plants manufactured by Toshiba Corporation) as a light source for illumination, except that the photosynthetic photon flux density was 100 µmol/m²/sec. The results such as content of TCQA (% by mass with respect to dry matter weight) in the leaves of the resulting crown daisy are shown in the columns of Example 38 and Example 39 in Table 1.

### [Measuring method]

In the present example, the measurement of each component was carried out by the following method.

### <Content of ions in culture solution>

The content of ions contained in the culture solution (and tap water) was measured by inductively coupled plasma (ICP) emission spectroscopy for the first ion and Fe ion. The measurement conditions for ICP emission spectroscopy are as follows.
Spray chamber: gas cyclone
Plasma gas flow rate: 15 L/min
Auxiliary gas flow rate: 0.2 L/min
Nebulizer gas flow rate: 1 L/min
Number of repetitions: 3 times
Sample delay time: 30S

Ions other than the above-mentioned first ion and Fe ion were measured by ion chromatography. The measurement conditions for ion chromatography are as follows. The content of each component in the culture solution was determined from a calibration curve for each component.
Column: SHODEX YS-50
Free liquid: 4 mM HNO₃
Flow rate: 0.8 mL/min
Column temperature: 40°C

### <Content of CQA in plant and processed plant product>

The content of CQA in a plant and a processed plant product was determined by obtaining an extract for measurement from the plant and the processed plant product by the following method, and measuring the extract by high performance liquid chromatography (HPLC).

### (Extraction method)

The obtained leaves and petioles of the plant or processed plant product were cut with scissors, and the leaves and petiole portions were further cut with scissors and dried in a vacuum dryer at 80°C for 8 hours to obtain a dried matter of leaves (dried leaves). Thereafter, the dried leaves obtained by vacuum drying were loosened and pulverized by hand to obtain a powder of the dried leaves. Next, 50 mg of the powder of the dried leaves was precisely weighed, 2.5 ml of an EtOH/water (80:20 vol/vol) mixed solvent was added thereto, and the mixture was heated and extracted at 80°C for 1 hour to obtain a crude extract. 7.5 ml of an EtOH/water (80:20 vol/vol) mixed solvent was added to the obtained crude extract which was then filtered to obtain an extract.

### (Measuring method)

The above extract was used as an analyte and subjected to HPLC measurement under the following conditions. The content of CQAs (DCQA, TCQA, and total CQA) was calculated from the calibration curve.
Column: TSK gel ODS 100V (manufactured by Tosoh Corporation)
Flow rate: 0.3 mL/min,
Developing solvent: using liquid A: 0.1% H₃PO₄ H₂O, liquid B: 0.1% H₃PO₄ MeCN, gradient elution was carried out from 10% liquid B (0 min) to 40% liquid B (15 min).
Column temperature: 40°C
Detection: ultraviolet (UV) detector (330 nm)

[Table 1]

**Table 1 (Part 1)-1**

| Test Example | No. | Plant | First step | |
|---|---|---|---|---|
| | | | Cultivation conditions | Days |
| 1 | Comparative Example 1 | Sweet potato | Hydroponic, 30°C, 50%, LED 300 µmol | 14 |
| | Example 1 | Sweet potato | Hydroponic, 30°C, 50%, LED 300 µmol | 14 |
| 2 | Comparative Example 2 | Sweet potato | Hydroponic, 30°C, 50%, LED 300 µmol | 14 |
| | Example 2 | Sweet potato | Hydroponic, 30°C, 50%, LED 300 µmol | 14 |
| | Example 3 | Sweet potato | Hydroponic, 30°C, 50%, LED 300 µmol | 14 |
| | Example 4 | Sweet potato | Hydroponic, 30°C, 50%, LED 300 µmol | 14 |
| | Example 5 | Sweet potato | Hydroponic, 30°C, 50%, LED 300 µmol | 14 |
| | Example 6 | Sweet potato | Hydroponic, 30°C, 50%, LED 300 µmol | 14 |
| | Example 7 | Sweet potato | Hydroponic, 30°C, 50%, LED 300 µmol | 12 |
| 3 | Comparative Example 3 | Sweet potato | Hydroponic, 30°C, 50%, LED 300 µmol | 14 |
| | Example 8 | Sweet potato | Hydroponic, 30°C, 50%, LED 300 µmol | 14 |
| | Example 9 | Sweet potato | Hydroponic, 30°C, 50%, LED 300 µmol | 14 |
| | Example 10 | Sweet potato | Hydroponic, 30°C, 50%, LED 300 µmol | 14 |
| | Example 11 | Sweet potato | Hydroponic, 30°C, 50%, LED 300 µmol | 14 |
| 4 | Example 12 | Sweet potato | Hydroponic, 30°C, 50%, LED 300 µmol | 15 |
| | Example 13 | Sweet potato | Hydroponic, 30°C, 50%, LED 300 µmol | 15 |
| | Example 14 | Sweet potato | Hydroponic, 30°C, 50%, LED 300 µmol | 15 |
| | Example 15 | Sweet potato | Hydroponic, 30°C, 50%, LED 300 µmol | 15 |
| | Comparative Example 4 | Sweet potato | Hydroponic, 30°C, 50%, LED 300 µmol | 14 |
| | Comparative Example 5 | Sweet potato | Hydroponic, 30°C, 50%, LED 300 µmol | 26 |
| | Comparative Example 6 | Sweet potato | Hydroponic, 30°C, 50%, LED 300 µmol | 14 |
| 5 | Example 16 | Sweet potato | Hydroponic, 30°C, 50%, LED 300 µmol | 14 |
| | Example 17 | Sweet potato | Hydroponic, 30°C, 50%, LED 300 µmol | 14 |
| | Example 18 | Sweet potato | Hydroponic, 30°C, 50%, LED 300 µmol | 14 |
| | Example 19 | Sweet potato | Hydroponic, 30°C, 50%, LED 300 µmol | 14 |
| | Example 20 | Sweet potato | Hydroponic, 30°C, 50%, LED 300 µmοl | 14 |
| | Example 21 | Sweet potato | Hydroponic, 30°C, 50%, LED 300 µmol | 14 |
| | Example 22 | Sweet potato | Hydroponic, 30°C, 50%, LED 300 µmol | 14 |
| | Example 23 | Sweet potato | Hydroponic, 30°C, 50%, LED 300 µmol | 14 |

[Table 2]

**Table 1 (Part 1)-2**

| Test Example | No. | Second step | | | Drying step | | |
|---|---|---|---|---|---|---|---|
| | | Culture solution | Cultivation conditions | Days | Temperature | Humidity | Days |
| 1 | Comparative Example 1 | | | | | | |
| | Example 1 | Pure water | 30°C, 50%, LED 300 µmol | 14 | | | |
| 2 | Comparative Example 2 | | | | | | |
| | Example 2 | Pure water | 30°C, 50%, LED 300 µmol | 14 | | | |
| | Example 3 | Water (1) | 30°C, 50%, LED 300 µmol | 14 | | | |
| | Example 4 | Water (2) | 30°C, 50%, LED 300 µmol | 13 | | | |
| | Example 5 | Water (3)-1 | 30°C, 50%, LED 300 µmol | 14 | | | |
| | Example 6 | Water (3)-2 | 30°C, 50%, LED 300 µmol | 14 | | | |
| | Example 7 | Water (3)-3 | 30°C, 50%, LED 300 µmοl | 14 | | | |
| 3 | Comparative Example 3 | | | | | | |
| | Example 8 | Pure water | 30°C, 50%, LED 300 µmοl | 14 | | | |
| | Example 9 | Pure water | 30°C, 50%, LED 300 µmol | 15 | 30 | 50 | 6 |
| | Example 10 | Water (3)-2 | 30°C, 50%, LED 300 µmol | 14 | | | |
| | Example 11 | Water (3)-2 | 30°C, 50%, LED 300 µmοl | 14 | 25 | 50 | 6 |
| 4 | Example 12 | Water (3)-4 | 30°C, 50%, LED 300 µmοl | 13 | | | |
| | Example 13 | Water (3)-4 | 30°C, 50%, LED 300 µmοl | 13 | 30 | 50 | 7 |
| | Example 14 | Water (3)-5 | 30°C, 50%, LED 300 µmol | 14 | | | |
| | Example 15 | Water (3)-5 | 30°C, 50%, LED 300 µmοl | 14 | 30 | 50 | 8 |
| | Comparative Example 4 | | | | | | |
| | Comparative Example 5 | | | | | | |
| | Comparative Example 6 | | | | 25 | 50 | 4 |
| 5 | Example 16 | Water (3)-2 ' | 30°C, 50%, LED 300 µmοl | 13 | 25 | 50 | 6 |
| | Example 17 | Water (3)-2 | 30°C, 50%, LED 300 µmol | 13 | 30 | 60 | 6 |
| | Example 18 | Water (3)-2 | 30°C, 50%, LED 300 µmol | 13 | 20 | 95 | 6 |
| | Example 19 | Water (3)-2 | 30°C, 50%, LED 300 µmol | 13 | 25 | 80 | 6 |
| | Example 20 | Water (3)-2 | 30°C, 50%, LED 300 µmol | 13 | 30 | 60 | 9 |
| | Example 21 | Water (3)-2 | 30°C, 50%, LED 300 µmol | 13 | 25 | 80 | 9 |
| | Example 22 | Water (3)-2 | 30°C, 50%, LED 300 µmol | 13 | 20 | 95 | 9 |
| | Example 23 | Water (3)-2 | 30°C, 50%, LED 300 µmol | 13 | 25 | 80 | 3 |

[Table 3]

**Table 1 (Part 1)-3**

| Test Example | No. | CQA content (% by mass with respect to dry matter weight) | | | Yield of leaves (g/plant, dry matter weight) |
|---|---|---|---|---|---|
| | | DCQA | TCQA | Total CQA | |
| 1 | Comparative Example 1 | 2.73 | 0.00 | 3.60 | 1.26 |
| | Example 1 | 3.87 | 0.25 | 6.03 | 1.35 |
| 2 | Comparative Example 2 | 2.47 | 0.01 | 3.15 | 1.60 |
| | Example 2 | 2.63 | 0.19 | 6.61 | 1.81 |
| | Example 3 | 2.78 | 0.19 | 7.87 | 3.51 |
| | Example 4 | 4.91 | 0.19 | 7.15 | 2.58 |
| | Example 5 | 3.08 | 0.31 | 8.03 | 2.77 |
| | Example 6 | 3.01 | 0.29 | 7.82 | 3.29 |
| | Example 7 | 5.52 | 0.41 | 7.64 | 2.39 |
| 3 | Comparative Example 3 | 2.50 | 0.01 | 3.36 | 1.66 |
| | Example 8 | 4.48 | 0.18 | 6.47 | 1.87 |
| | Example 9 | 5.40 | 0.43 | 6.74 | 1.87 |
| | Example 10 | 4.96 | 0.44 | 7.17 | 2.99 |
| | Example 11 | 6.50 | 0.87 | 8.37 | 2.99 |
| 4 | Example 12 | 4.60 | 0.56 | 9.38 | 1.29 |
| | Example 13 | 7.02 | 1.43 | 14.10 | 1.29 |
| | Example 14 | 4.37 | 0.36 | 6.48 | 3.22 |
| | Example 15 | 7.53 | 1.05 | 10.16 | 3.22 |
| | Comparative Example 4 | 2.82 | 0.02 | 3.62 | 1.12 |
| | Comparative Example 5 | 3.22 | 0.03 | 453 | 2.37 |
| | Comparative Example 6 | 2.20 | 0.10 | 2.60 | 1.12 |
| 5 | Example 16 | 5.98 | 0.39 | 7.15 | 1.89 |
| | Example 17 | 6.27 | 0.65 | 7.72 | 1.89 |
| | Example 18 | 5.50 | 0.67 | 7.07 | 1.89 |
| | Example 19 | 6.25 | 0.69 | 7.70 | 1.89 |
| | Example 20 | 6.52 | 0.99 | 8.24 | 1.89 |
| | Example 21 | 7.19 | 0.82 | 8.90 | 1.89 |
| | Example 22 | 6.19 | 0.75 | 8.23 | 1.89 |
| | Example 23 | 6.87 | 0.58 | 8.94 | 1.89 |

[Table 4]

**Table 1 (Part 2)-1**

| Test Example | No | Plant | First step | |
|---|---|---|---|---|
| | | | Cultivation conditions | Days |
| 6 | Example 24 | Sweet potato | Hydroponic, 30°C, 50%, LED 300 µmol | 14 |
| | Example 25 | Sweet potato | Hydroponic, 30°C, 50%, LED 300 µmol | 14 |
| | Example 26 | Sweet potato | Hydroponic, 30°C, 50%, LED 300 µmol | 14 |
| | Example 27 | Sweet potato | Hydroponic, 30°C, 50%, LED 300 µmol | 14 |
| | Example 28 | Sweet potato | Hydroponic, 30°C, 50%, LED 300 µmol | 14 |
| | Example 29 | Sweet potato | Hydroponic, 30°C, 50%, LED 300 µmol | 14 |
| | Example 30 | Sweet potato | Hydroponic, 30°C, 50%, LED 300 µmοl | 14 |
| 7 | Example 31 | Sweet potato | Hydroponic, daytime: 30°C, 70%, night: 25°C, 90%, fluorescent lamp 300 µmοl | 14 |
| | Example 32 | Sweet potato | Hydroponic, 35°C, 50%, fluorescent lamp 450 µmol, CO₂: 1500 ppm | 14 |
| | Example 33 | Sweet potato | Hydroponic, 35°C, 50%, fluorescent lamp 450 µmol, CO₂: 1500 ppm | 14 |
| 8 | Comparative Example 7 | Sweet potato | Soil culture, 30°C, 45%, fluorescent lamp 70 µmοl | Continued |
| | Example 34 | Sweet potato | Soil culture, 30°C, 45%, fluorescent lamp 70 µmοl | Continued |
| | Example 35 | Sweet potato | Soil culture, 30°C, 45%, fluorescent lamp 70 µmol | Continued |
| 9 | Comparative Example 8 | KOGANESEN GAN | Hydroponic, 30°C, 60%, fluorescent lamp 140 µmol | 14 |
| | Example 36 | KOGANESEN GAN | Hydroponic, 30°C, 60%, fluorescent lamp 140 µmol | 14 |
| | Example 37 | KOGANESEN GAN | Hydroponic, 30°C, 60%, fluorescent lamp 140 µmol | 14 |
| 10 | Comparative Example 9 | Crown daisy | Soil culture, outdoor field | Procured |
| | Example 38 | Crown daisy | Soil culture, outdoor field | Procured |
| | Example 39 | Crown daisy | Soil culture, outdoor field | Procured |

[Table 5]

**Table 1 (Part 2)-2**

| Test Example | No. | Second step | | | Drying step | | |
|---|---|---|---|---|---|---|---|
| | | Culture solution | Cultivation conditions | Days | Temperature Humidity | | Days |
| 6 | Example 24 | Pure water | 30°C, 50%, LED 300 µmοl | 15 | 25 | 50 | 12 |
| | Example 25 | Pure water | 30°C, 50%, LED 300 µmol | 15 | 30 | 50 | 6 |
| | Example 26 | Pure water | 30°C, 50%, LED 300 µmol | 15 | 25 | 50 | 6 |
| | Example 27 | Pure water | 30°C, 50%, LED 300 µmol | 15 | 20 | 50 | 6 |
| | Example 28 | Pure water | 30°C, 50%, LED 300 µmol | 15 | 15 | 50 | 6 |
| | Example 29 | Pure water | 30°C, 50%, LED 300 µmol | 15 | 30 | 50 | 4 |
| | Example 30 | Pure water | 30°C, 50%, LED 300 µmοl | 15 | 40 | 60 | 4 |
| 7 | Example 31 | Pure water | Daytime: 30°C, 70%, night: 25°C, 90%, fluorescent lamp 300 µmol | 15 | | | |
| | Example 32 | Water (3)-2 | 35°C, 50%, fluorescent lamp 450 µmol, CO₂: 1500 ppm | 15 | | | |
| | Example 33 | Water (3)-2 | 35°C, 50%, fluorescent lamp 450 µmol, CO₂: 1500 ppm | 15 | 25 | 50 | 7 |
| 8 | Comparative Example 7 | | | | | | |
| | Example 34 | Pure water | 30°C, 50%, LED 300 µmοl | 14 | | | |
| | Example 35 | Water (3)-2 | 30°C, 50%, LED 300 µmοl | 14 | | | |
| 9 | Comparative Example 8 | | | | | | |
| | Example 36 | Pure water | 30°C, 60%, fluorescent lamp 140 µmol | 14 | | | |
| | Example 37 | Pure water | 30°C, 60%, fluorescent lamp 140 µmol | 14 | 30 | 50 | 6 |
| 10 | Comparative Example 9 | | | | | | |
| | Example 38 | Pure water | 23°C, 70%, fluorescent lamp 100 µmol | 6 | | | |
| | Example 39 | Water (3)-2 | 23°C, 70%, fluorescent lamp 100 µmol | 6 | | | |

[Table 6]

**Table 1 (Part 2)-3**

| Test Example | No. | CQA content (% by mass with respect to dry matter weight) | | | Yield of leaves (g/plant, dry matter weight) |
|---|---|---|---|---|---|
| | | DCQA | TCQA | Total CQA | |
| 6 | Example 24 | 5.13 | 0.73 | 6.51 | 1.90 |
| | Example 25 | 2.96 | 0.60 | 4.41 | 0.92 |
| | Example 26 | 3.85 | 0.84 | 5.55 | 0.92 |
| | Example 27 | 3.1 | 0.78 | 4.62 | 0.92 |
| | Example 28 | 4.23 | 0.47 | 5.88 | 0.92 |
| | Example 29 | 4.71 | 0.65 | 6.46 | 2.88 |
| | Example 30 | 4.38 | 0.42 | 5.71 | 2.88 |
| 7 | Example 31 | 5.53 | 0.18 | 8.08 | 2.15 |
| | Example 32 | 5.11 | 0.27 | 6.84 | 3.32 |
| | Example 33 | 6.02 | 0.53 | 7.33 | 3.32 |
| 8 | Comparative Example 7 | 1.44 | 0.11 | 2.47 | 0.24 |
| | Example 34 | 3.92 | 0.36 | 6.28 | 0.51 |
| | Example 35 | 4.73 | 0.31 | 7.36 | 0.80 |
| 9 | Comparative Example 8 | 2.22 | 0.02 | 2.86 | 2.11 |
| | Example 36 | 2.82 | 0.10 | 4.26 | 2.67 |
| | Example 37 | 4.14 | 0.26 | 5.14 | 2.67 |
| 10 | Comparative Example 9 | 0.43 | 0.00 | 0.61 | 0.54 |
| | Example 38 | 0.91 | 0.00 | 1.35 | 0.69 |
| | Example 39 | 0.82 | 0.00 | 1.33 | 0.60 |

Table 1 is divided into Table 1 (Part 1)-1 to Table 1 (Part 1)-3, and Table 1 (Part 2)-1 to Table 1 (Part 2)-3, and the cultivation conditions and results according to each Example are described in the corresponding rows of each of the divided tables.

For example, in a case of Example 1 of Test Example 1, the results are described in Table 1 (Part 1)-1 to Table 1 (Part 1)-3. That is, in Example 1, the description given in Table 1 indicates that sweet potato was used as a plant, the cultivation conditions in the first step were "Hydroponic, 30°C, 50%, LED 300 µmol", the number of days was 14 days, and the culture solution used in the second step was pure water, the cultivation conditions were "30°C, 50%, LED 300 µmol", the number of days was 14 days, the drying step was not carried out, and as a result, DCQA contained in the leaves was 3.87% by mass, TCQA was 0.25% by mass, and total CQA was 6.03% by mass with respect to the dry matter weight of the leaves, and the yield of leaves was 1.35 g in dry matter weight per plant. The same applies to the other Examples and Comparative Examples.

**[Table 7]**

| Table 2 (Part 1) | PO₄³⁻ | NO₃⁻ | NH₄⁺ | Fe | Na⁺ |
|---|---|---|---|---|---|
| Tap water | 0.2 | 4.8 | 0.1 | 0.02 | 7.9 |
| Pure water | <0.1 | <0.1 | <0.1 | <0.02 | 0.1 |
| Water (1) | <0.1 | <0.1 | <0.1 | <0.02 | 0.2 |
| Water (2) | <0.1 | <0.1 | <0.1 | <0.02 | <0.1 |
| Water (3)-1 | <0.1 | <0.1 | <0.1 | <0.02 | 0.2 |
| Water (3)-2 | <0.1 | <0.1 | <0.1 | <0.02 | 0.2 |
| Water (3)-3 | <0.1 | <0.1 | <0.1 | <0.02 | 0.2 |
| Water (3)-4 | <0.1 | <0.1 | <0.1 | 0.68 | 0.5 |
| Water (3)-5 | <0.1 | <0.1 | <0.1 | <0.02 | 0.2 |

**[Table 8]**

| Table 2 (Part 2) | First ion | | | | |
|---|---|---|---|---|---|
| | B | Mn | Zn | Cu | Mo |
| Tap water | <0.01 | <0.01 | 0.05 | <0.01 | <0.01 |
| Pure water | <0.02 | <0.02 | <0.02 | <0.02 | <0.02 |
| Water (1) | 0.16 | 0.20 | 0.08 | 0.04 | 0.02 |
| Water (2) | <0.02 | <0.02 | <0.02 | <0.02 | <0.02 |
| Water (3)-1 | 0.16 | 0.20 | 0.08 | 0.04 | 0.02 |
| Water (3)-2 | 0.16 | 0.20 | 0.08 | 0.04 | 0.02 |
| Water (3)-3 | 0.16 | 0.20 | 0.08 | 0.04 | 0.02 |
| Water (3)-4 | 0.16 | 0.20 | 0.08 | 0.04 | 0.02 |
| Water (3)-5 | 0.16 | 0.20 | 0.08 | 0.04 | 0.02 |

**[Table 9]**

| Table 2 (Part 3) | Second ion | | | | |
|---|---|---|---|---|---|
| | Cl⁻ | SO₄²⁻ | K⁺ | Mg²⁺ | Ca²⁺ |
| Tap water | 2.6 | 5.0 | 1.7 | 3.5 | 12.9 |
| Pure water | <0.1 | 0.1 | 0.1 | <0.1 | 0.1 |
| Water (1) | 0.3 | 0.2 | <0.1 | <0.1 | <0.1 |
| Water (2) | 117.2 | 36.3 | 72.0 | 9.2 | 29.2 |
| Water (3)-1 | 52.0 | 0.2 | <0.1 | <0.1 | 29.2 |
| Water (3)-2 | 117.5 | 0.2 | 72.0 | <0.1 | 29.2 |
| Water (3)-3 | 0.3 | 158.9 | 72.0 | <0.1 | 29.2 |
| Water (3)-4 | 124.5 | 36.5 | 72.0 | 9.2 | 29.2 |
| Water (3)-5 | 117.5 | 36.5 | 72.0 | 9.2 | 29.2 |

Table 2 shows the components of tap water and each culture solution. The components of each culture solution (and tap water) are described in each row in Table 2 (Part 1) to Table 2 (Part 3). That is, in a case of pure water, the description given in Table 2 indicates that phosphate ion, nitrate ion, NH₄⁺, and Fe ion were all less than the lower limit of quantification, the content of Na⁺ was 0.1 ppm by mass, B ion, Mn ion, Zn ion, Cu ion, and Mo ion as the first ions were all less than the lower limit of quantification, Cl⁻ as the second ion was less than the lower limit of quantification, SO₄²⁻ was 0.1 ppm by mass, K⁺ was 0.1 ppm by mass, Mg²⁺ was less than the lower limit of quantification, and Ca²⁺ was 0.1 ppm by mass. The same applies to other culture solutions and the like. In the table, "<(numerical value)" indicates that the value was less than the lower limit of quantification in the measurement method. In addition, each numerical value in Table 2 represents ppm by mass of each component with respect to the total mass of the culture solution.

### [Test Examples 11 and 12: Comparative Example 10, and Examples 40 to 47]

In order to confirm the effect of the difference in the components of the culture solution used in the second step on the effect of the present invention, tests were carried out under the following conditions. In addition, the methods of measuring TCQA and the like are as described above. In addition, Test Examples 11 and 12 were different from the foregoing Test Examples in the date and time in a case where the test was carried out.

### (First step)

Sweet potato seedlings were grown under the same cultivation conditions as in the first step of Test Example 1, except that the cultivation temperature was changed from 30°C to 25°C and the cultivation period was changed from 14 days to 15 days in the cultivation method described as the first step according to Example 1. The sweet potato after the completion of the first step had a DCQA content of 2.10% by mass of dry matter weight, a TCQA content of 0.01% by mass of dry matter weight and a total CQA content of 2.82% by mass of dry matter weight in the leaves thereof, and a low yield of leaves of 1.46 g/plant (dry matter weight). The results are shown in the column of Comparative Example 10 in Table 3.

### (Second step)

Next, with respect to the sweet potatoes after the completion of the first step, the entire amount of the liquid fertilizer in the hydroponic culture device was discarded, the culture solution described in the column of "Culture solution" in Table 1 was added in place thereof, and the cultivation was further continued for 14 days under the same temperature, humidity, and light conditions as in the first step. The measurement results such as content of TCQA in the leaves of the sweet potato after the completion of the second step are shown in the columns of Examples 40 to 43 in Table 1.

In addition, each culture solution was adjusted by the method described above such that each component was set as shown in Table 4. In addition, the method of measuring the content of each ion in the culture solution is as described above. In addition, the tap water used as raw water is as shown in Table 2.

From the results of Test Example 11, the sweet potato produced by the production method of Example 41, in which the culture solution contained two or more types of first ions, and the content of each of the first ions was 1.0 ppm by mass or less with respect to the total mass of the culture solution, had a higher content of DCQA, a higher content of TCQA and a higher content of total CQA in the leaves thereof, and a higher yield of leaves as compared with the sweet potato produced by the production method of Example 42.

In addition, from the results of Test Example 11, the sweet potato produced by the production method of Example 41, in which the culture solution contained two or more types of second ions (here, Cl⁻, SO₄²⁻, K⁺, and Ca²⁺), and the content of each of Cl⁻, K⁺, and Ca²⁺ among those second ions was 1.0 to 300 ppm by mass with respect to the total mass of the culture solution, had a higher content of DCQA, a higher content of TCQA and a higher content of total CQA in the leaves thereof, and a higher yield of leaves as compared with the sweet potato produced by the production method of Example 43.

### (Production of processed plant product)

The portion of the sweet potato stem that had not been immersed in the culture solution (the leaf stem portion, which is synonymous with the "aerial part") after the completion of the second step was cut with scissors, and the leaf stem portion was placed on a thermostat adjusted to the temperature and humidity described in Table 3 and then dried for the period described in Table 3 to produce a processed plant product. The TCQA content and the like of the processed plant product thus produced are shown in the columns of Examples 44 to 47 in Table 3.

From the results of Test Example 12, the processed plant products produced by the production methods of Examples 44 to 47 had a higher content of each of DCQA, TCQA and total CQA as compared with the leaves of the sweet potatoes produced by the production methods of Examples 40 to 43, in which the culture solution used in the second step was the same as that in Examples 44 to 47.

In addition, the processed plant product produced by the production method of Example 47, in which the culture solution in the second step contained the first ion, had a higher content of each of DCQA, TCQA and total CQA as compared with the processed plant product of Example 44.

In addition, the processed plant product produced by the production method of Example 45, in which the culture solution in the second step contained two or more types of second ions (here, Cl⁻, SO₄²⁻, K⁺, and Ca²⁺), and the content of each of Cl⁻, K⁺, and Ca²⁺ among those second ions was 1.0 to 300 ppm by mass with respect to the total mass of the culture solution, had a higher content of each of DCQA and total CQA as compared with the processed plant product of Example 47.

In addition, the processed plant product produced by the production method of Example 45, in which the culture solution in the second step contained the first ions and the content of each of the first ions was 1.0 ppm by mass or less, and the culture solution contained two or more types of second ions (here, Cl⁻, SO₄²⁻, K⁺, and Ca²⁺) and the content of each of Cl⁻, K⁺, and Ca²⁺ among those second ions was 1.0 to 300 ppm by mass with respect to the total mass of the culture solution, had a higher content of each of DCQA, TCQA and total CQA as compared with the processed plant product produced by the production method of Example 46.

**[Table 10]**

| Table 3-1 | | | | |
|---|---|---|---|---|
| Test Example | No. | Plant | First step | |
| | | | Cultivation conditions | Days |
| 11 | Comparative Example 10 | Sweet potato | Hydroponic, 25°C, 50%, LED 300 µmοl | 15 |
| | Example 40 | Sweet potato | Hydroponic, 25°C, 50%, LED 300 µmol) | 15 |
| | Example 41 | Sweet potato | Hydroponic, 25°C, 50%, LED 300 µmol | 15 |
| | Example 42 | Sweet potato | Hydroponic, 25°C, 50%, LED 300 µmol | 15 |
| | Example 43 | Sweet potato | Hydroponic, 25°C, 50%, LED 300 µmol | 15 |
| 12 | Example 44 | Sweet potato | Hydroponic, 25°C, 50%, LED 300 µmol | 15 |
| | Example 45 | Sweet potato | Hydroponic, 25°C, 50%, LED 300 µmol | 15 |
| | Example 46 | Sweet potato | Hydroponic, 25°C, 50%, LED 300 µmol | 15 |
| | Example 47 | Sweet potato | Hydroponic, 25°C, 50%, LED 300 µmol | 15 |

**[Table 11]**

| Table 3-2 | | | | | | | |
|---|---|---|---|---|---|---|---|
| Test Example | No. | Second step | | | Drying step | | |
| | | Culture solution | Cultivation conditions | Days | Temperature | Humidity | Days |
| 11 | Comparative Example 10 | | | | | | |
| | Example 40 | Pure water | 25°C, 50%, LED 300 µmοl | 14 | | | |
| | Example 41 | Water (3)-2 | 25°C, 50%, LED 300 µmol | 14 | | | |
| | Example 42 | Water (4) | 25°C, 50%, LED 300 µmοl | 14 | | | |
| | Example 43 | Water (5) | 25°C, 50%, LED 300 µmol | 14 | | | |
| 12 | Example 44 | Pure water | 25°C, 50%, LED 300 µmol | 14 | 25 | 50 | 5 |
| | Example 45 | Water (3)-2 | 25°C, 50%, LED 300 µmοl | 14 | 25 | 50 | 5 |
| | Example 46 | Water (4) | 25°C, 50%, LED 300 µmol | 14 | 25 | 50 | 5 |
| | Example 47 | Water (5) | 25°C, 50%, LED 300 µmοl | 14 | 25 | 50 | 5 |

**[Table 12]**

| Table 3-3 | | | | | |
|---|---|---|---|---|---|
| Test Example | No. | CQA content (% by mass with respect to dry matter weight) | | | Yield of leaves (g/plant, dry matter weight) |
| | | DCQA | TCQA | Total CQA | |
| 11 | Comparative Example 10 | 2.10 | 0.01 | 2.82 | 1.46 |
| | Example 40 | 3.65 | 0.14 | 5.46 | 2.21 |
| | Example 41 | 4.38 | 0.28 | 6.05 | 2.70 |
| | Example 42 | 3.70 | 0.13 | 5.31 | 2.36 |
| | Example 43 | 4.03 | 0.21 | 5.50 | 2.21 |
| 12 | Example 44 | 4.79 | 0.26 | 5.82 | 2.21 |
| | Example 45 | 6.91 | 0.61 | 8.41 | 2.70 |
| | Example 46 | 6.25 | 0.36 | 7.89 | 2.36 |
| | Example 47 | 5.75 | 0.64 | 7.20 | 2.21 |

Table 3 is divided into Table 3-1 to Table 3-3, and the cultivation conditions and results according to each Example are described in the corresponding rows of each of the divided tables.

More specifically, in a case of Example 40 of Test Example 11, the description given in Table 3 indicates that sweet potato was used as a plant, the cultivation conditions in the first step were "Hydroponic, 25°C, 50%, LED 300 µmol", the number of days was 15 days, and the culture solution used in the second step was pure water, the cultivation conditions were "25°C, 50%, LED 300 µmol", the number of days was 14 days, the drying step was not carried out, and as a result, DCQA contained in the leaves was 3.65% by mass, TCQA was 0.14% by mass, and total CQA was 5.46% by mass with respect to the dry matter weight of the leaves, and the yield of leaves was 2.21 g in dry matter weight per plant. The same applies to the other Examples and Comparative Examples.

**[Table 13]**

| Table 4 (Part 1) | PO₄³⁻ | NO₃⁻ | NH₄⁺ | Fe | Na⁺ |
|---|---|---|---|---|---|
| Pure water | <0.1 | <0.1 | <0.1 | <0.02 | 0.1 |
| Water (3)-2 | <0.1 | <0.1 | <0.1 | <0.02 | 0.2 |
| Water (4) | 0.0 | 0.1 | <0.1 | <0.02 | 1.7 |
| Water (5) | 0.0 | 0.2 | <0.1 | <0.02 | 0.3 |

**[Table 14]**

| Table 4 (Part 2) | First ion | | | | |
|---|---|---|---|---|---|
| | B | Mn | Zn | Cu | Mo |
| Pure water | <0.02 | <0.02 | <0.02 | <0.02 | <0.02 |
| Water (3)-2 | 0.16 | 0.20 | 0.08 | 0.04 | 0.02 |
| Water (4) | 1.56 | 1.96 | 0.08 | 0.04 | 0.02 |
| Water (5) | 0.16 | 0.20 | 0.08 | 0.04 | 0.02 |

**[Table 15]**

| Table 4 (Part 3) | Second ion | | | | |
|---|---|---|---|---|---|
| | Cl⁻ | SO₄²⁻ | K⁺ | Mg²⁺ | Ca²⁺ |
| Pure water | <0.1 | 0.1 | 0.1 | <0.1 | 0.1 |
| Water (3)-2 | 117.5 | 0.2 | 72.0 | <0.1 | 29.2 |
| Water (4) | 115.7 | 0.1 | 73.4 | <0.1 | 35.8 |
| Water (5) | 376.8 | 0.1 | 370.9 | <0.1 | 34.6 |

Table 4 shows the components of each culture solution. The components of each culture solution are described in each row in Table 4 (Part 1) to Table 4 (Part 3). That is, in a case of pure water, the description given in Table 4 indicates that phosphate ion, nitrate ion, NH₄⁺, and Fe ion were all less than the lower limit of quantification, the content of Na⁺ was 0.1 ppm by mass, B ion, Mn ion, Zn ion, Cu ion, and Mo ion as the first ions were all less than the lower limit of quantification, Cl⁻ as the second ion was less than the lower limit of quantification, SO₄²⁻ was 0.1 ppm by mass, K⁺ was 0.1 ppm by mass, Mg²⁺ was less than the lower limit of quantification, and Ca²⁺ was 0.1 ppm by mass. The same applies to other culture solutions and the like. In the table, "<(numerical value)" indicates that the value was less than the lower limit of quantification in the measurement method. In addition, each numerical value in Table 4 represents ppm by mass of each component with respect to the total mass of the culture solution.

## Claims

1. A method for producing a plant, comprising:
a step of growing at least one plant selected from the group consisting of a sweet potato and crown daisies; and
a step of subjecting the grown plant to nutriculture using a culture solution;
wherein the content of each of a nitrate ion and a phosphate ion in the culture solution is less than 10 ppm by mass with respect to a total mass of the culture solution,
wherein the culture solution contains a metal ion of at least one metal selected from the group consisting of B, Mn, Zn, Cu, and Mo,
wherein, in a case where the culture solution contains one type of the metal ion, a content of the metal ion is 20 ppb by mass or more and 1.0 ppm by mass or less with respect to a total mass of the culture solution; and
wherein, in a case where the culture solution contains two or more types of the metal ions, the content of each of the metal ions is 20 ppb by mass or more and 1.0 ppm by mass or less with respect to the total mass of the culture solution.

2. The method for producing a plant according to claim 1,
wherein the culture solution contains a Mn ion, and a content of the Mn ion is more than 50 ppb by mass and 1.0 ppm by mass or less with respect to a total mass of the culture solution.

3. The method for producing a plant according to claim 1 or 2,
wherein the culture solution contains at least one ion selected from the group consisting of K⁺, Mg²⁺, Ca²⁺, SO₄²⁻, and Cl⁻;
in a case where the culture solution contains one type of the ion, a content of the ion is 1.0 ppm by mass or more with respect to a total mass of the culture solution; and
in a case where the culture solution contains two or more types of the ions, the content of each of the ions is 1.0 ppm by mass or more with respect to the total mass of the culture solution.

4. The method for producing a plant according to claim 3,
wherein, in a case where the culture solution contains one type of the ion, the content of the ion is 1.0 to 300 ppm by mass with respect to the total mass of the culture solution; and
in a case where the culture solution contains two or more types of the ions, the content of each of the ions is 1.0 to 300 ppm by mass with respect to the total mass of the culture solution.

5. The method for producing a plant according to any one of claims 1 to 4,
wherein the culture solution contains a metal ion of at least one metal selected from the group consisting of B, Mn, Zn, Cu, and Mo, and
at least one ion selected from the group consisting of K⁺, Mg²⁺, Ca²⁺, SO₄²⁻, and Cl⁻.

6. A method for producing a plant according to any one of claims 1 to 5, further comprising:
a step of removing a root portion of the plant obtained by the method steps of any of the claims 1 to 5 to obtain a leaf stem portion of the plant; and
a step of drying the leaf stem portion in a state where no culture solution is supplied to obtain a processed plant product.

7. The method for producing a plant according to claim 6,
wherein the step of drying is carried out at a temperature of 20°C to 35°C and a relative humidity of 30% to 95%.

## Patentansprüche

1. Verfahren zum Erzeugen einer Pflanze, aufweisend:
einen Schritt des Heranziehens mindestens einer Pflanze, die ausgewählt wird aus der Gruppe, die aus einer Süßkartoffel und Speisechrysanthemen besteht; und
einen Schritt des Unterziehens der herangezogenen Pflanze der Nutrikultur unter Verwendung einer Kulturlösung;
wobei der Gehalt an einem Nitration und einem Phosphation in der Kulturlösung jeweils weniger als 10 Masse-ppm, bezogen auf eine Gesamtmasse der Kulturlösung, beträgt,
wobei die Kulturlösung ein Metallion mindestens eines Metalls, das ausgewählt wird aus der Gruppe, die aus B, Mn, Zn, Cu und Mo besteht, enthält,
wobei in einem Fall, in dem die Kulturlösung eine Art von Metallion enthält, ein Gehalt an dem Metallion 20 Masse-ppb oder mehr und 1,0 Masse-ppm oder weniger, bezogen auf eine Gesamtmasse der Kulturlösung, beträgt; und
wobei in einem Fall, in dem die Kulturlösung zwei oder mehr Arten des Metallions enthält, der Gehalt jedes der Metallionen 20 Masse-ppb oder mehr und 1,0 Masse-ppm oder weniger, bezogen auf die Gesamtmasse der Kulturlösung, beträgt.

2. Verfahren zum Erzeugen einer Pflanze nach Anspruch 1,
wobei die Kulturlösung ein Mn-Ion enthält, und ein Gehalt an dem Mn-Ion mehr als 50 Masse-ppb und 1,0 Masse-ppm oder weniger, bezogen auf eine Gesamtmasse der Kulturlösung, beträgt.

3. Verfahren zum Erzeugen einer Pflanze nach Anspruch 1 oder 2,
wobei die Kulturlösung mindestens ein Ion enthält, das ausgewählt wird aus der Gruppe, die aus K⁺, Mg²⁺, Ca²⁺, SO₄²⁻ und Cl⁻ besteht;
in einem Fall, in dem die Kulturlösung eine Art des Ions enthält, ein Gehalt an dem Ion 1,0 Masse-ppm oder mehr, bezogen auf eine Gesamtmasse der Kulturlösung, beträgt; und
in einem Fall, in dem die Kulturlösung zwei oder mehr Arten des Ions enthält, der Gehalt an jedem der Ionen 1,0 Masse-ppm oder mehr, bezogen auf die Gesamtmasse der Kulturlösung, beträgt.

4. Verfahren zum Erzeugen einer Pflanze nach Anspruch 3,
wobei in einem Fall, in dem die Kulturlösung eine Art des Ions enthält, der Gehalt an dem Ion 1,0 bis 300 Masse-ppm, bezogen auf die Gesamtmasse der Kulturlösung, beträgt; und
in einem Fall, in dem die Kulturlösung zwei oder mehr Arten des Ions enthält, der Gehalt an jedem der Ionen 1,0 bis 300 Masse-ppm, bezogen auf die Gesamtmasse der Kulturlösung, beträgt.

5. Verfahren zum Erzeugen einer Pflanze nach einem der Ansprüche 1 bis 4,
wobei die Kulturlösung ein Metallion mindestens eines Metalls, das ausgewählt wird aus der Gruppe, die aus B, Mn, Zn, Cu, und Mo besteht, und
mindestens ein Ion, das ausgewählt wird aus der Gruppe, die aus K⁺, Mg²⁺, Ca²⁺, SO₄²⁻ und Cl⁻ besteht, enthält.

6. Verfahren zum Erzeugen einer Pflanze nach einem der Ansprüche 1 bis 5, außerdem aufweisend:
einen Schritt des Entfernens eines Wurzelteils der Pflanze, die nach den Verfahrensschritten nach einem der Ansprüche 1 bis 5 erhalten wurde, um einen Blattstengelteil der Pflanze zu erhalten; und
einen Schritt des Trocknens des Blattstengelteils in einem Zustand, in dem keine Kulturlösung zugeführt wird, um ein verarbeitetes Pflanzenprodukt zu erhalten.

7. Verfahren zum Erzeugen einer Pflanze nach Anspruch 6,
wobei der Schritt des Trocknens bei einer Temperatur von 20°C bis 35°C und einer relativen Feuchtigkeit von 30% bis 95% durchgeführt wird.

## Revendications

1. Procédé destiné à produire une plante, comprenant :
une étape pour cultiver au moins une plante sélectionnée parmi le groupe consistant en une patate douce et des chrysanthèmes couronnés, et
une étape pour soumettre la plante cultivée à une culture hydroponique à l'aide d'une solution de culture ;
dans lequel la teneur de chaque élément parmi un ion nitrate et un ion phosphate dans la solution de culture est inférieure à 10 ppm en masse par rapport à une masse totale de la solution de culture ;
dans lequel la solution de culture contient un ion métallique d'au moins un métal sélectionné parmi le groupe consistant en B, Mn, Zn, Cu et Mo,
dans lequel dans un cas où la solution de culture contient un type de l'ion métallique, une teneur de l'ion métallique est supérieure ou égale à 20 ppb en masse et inférieure ou égale à 1,0 ppm en masse par rapport à une masse totale de la solution de culture, et
dans lequel dans un cas où la solution de culture contient deux types des ions métalliques, ou davantage, la teneur de chacun des ions métalliques est supérieure ou égale à 20 ppb en masse et inférieure ou égale à 1,0 ppm en masse par rapport à la masse totale de la solution de culture.

2. Procédé destiné à produire une plante selon la revendication 1,
dans lequel la solution de culture contient un ion Mn, et une teneur de l'ion Mn est supérieure ou égale à 50 ppb en masse et inférieure ou égale à 1,0 ppm en masse par rapport à une masse totale de la solution de culture.

3. Procédé destiné à produire une plante selon la revendication 1 ou 2,
dans lequel la solution de culture contient au moins un ion sélectionné parmi le groupe consistant en K⁺, Mg²⁺, Ca²⁺, SO²⁻₄, et Cl⁻ ;
dans un cas où la solution de culture contient un type de l'ion, une teneur de l'ion est supérieure ou égale à 1,0 ppm en masse par rapport à une masse totale de la solution de culture, et
dans un cas où la solution de culture contient deux types des ions, ou davantage, la teneur de chacun des ions est supérieure ou égale à 1,0 ppm en masse par rapport à la masse totale de la solution de culture.

4. Procédé destiné à produire une plante selon la revendication 3,
dans lequel dans un cas où la solution de culture contient un type de l'ion, la teneur de l'ion s'étend de 1,0 à 300 ppm en masse par rapport à la masse totale de la solution de culture, et
dans un cas où la solution de culture contient deux types des ions, ou davantage, la teneur de chacun des ions s'étend de 1,0 à 300 ppm en masse par rapport à la masse totale de la solution de culture.

5. Procédé destiné à produire une plante selon l'une quelconque des revendications 1 à 4,
dans lequel la solution de culture contient un ion métallique d'au moins un métal sélectionné parmi le groupe consistant en B, Mn, Zn, Cu et Mo, et
au moins un ion sélectionné parmi le groupe consistant en K⁺, Mg²⁺, Ca²⁺, SO²⁻₄, et Cl⁻.

6. Procédé destiné à produire une plante selon l'une quelconque des revendications 1 à 5, comprenant en outre :
une étape pour retirer une portion de racine de la plante obtenue suite aux étapes du procédé selon l'une quelconque des revendications 1 à 5 afin d'obtenir une portion de tige et feuilles de la plante, et
une étape pour faire sécher la portion de tige et feuilles dans un état où aucune solution de culture n'est fournie afin d'obtenir un produit de plante ayant subi un traitement.

7. Procédé destiné à produire une plante selon la revendication 6,
dans lequel l'étape pour faire sécher est réalisée à une température allant de 20 °C à 35 °C et une humidité relative allant de 30 % à 95 %.
